# DEMANDE DE BREVET EUROPEEN

(11) **EP 1 300 718 A1**
(43) Date de publication de la demande: **09.04.2003**
(21) Numéro de dépôt: 02354147.7
(22) Date de dépôt: 30.09.2002
(51) Int. Cl.: G02C 9/04

(54) **Dispositif de montage d'une face complémentaire comprenant une attache en matière plastique moulée**

(30) Priorité: 22.04.2002 FR 0204995; 03.10.2001 FR 0112694
(71) Demandeur: J.H.B. Etablissements Julien Buffard, 74330 Choisy (FR)
(72) Inventeur: Pitre, Stéphane, 74330 Choisy (FR)
(74) Mandataire: Hecke, G.

(57) **Abrégé**

Le dispositif de montage d'une face complémentaire destinée à être posée sur une paire de lunettes, comprend au moins une attache (1) en matière plastique moulée. L'attache (1) comporte une base (2) délimitant avec des parois latérales avant (3) et arrière (4) une première encoche (5) dans laquelle le verre d'une face complémentaire est inséré et collé. La face interne (6) de la base de l'attache, située à l'intérieur de l'encoche (5) est inclinée d'un angle (α) de l'ordre de 80° par rapport à la paroi latérale arrière (4) de l'encoche (5). Elle comporte également des moyens de fixation destinés à accrocher la face complémentaire sur un verre de la paire de lunette. La face complémentaire peut comporter deux verres s'accrochant séparément sur chaque verre de la paire de lunettes ou deux verres reliés par une barre.

## Description

L'invention concerne un dispositif de montage d'une face complémentaire destinée à être posée sur une paire de lunettes, comprenant au moins une attache en matière plastique moulée, ladite attache comprenant :
- une base délimitant avec des parois latérales avant et arrière une première encoche dans laquelle un verre de la face complémentaire est inséré et collé,
- et des moyens de fixation destinés à accrocher la face complémentaire sur un verre de la paire de lunette.

### État de la technique

Les faces complémentaires connues, destinées à être appliquées sur les verres d'une paire de lunettes peuvent être deux verres reliés par une barre ou des verres s'appliquant séparément sur chaque verre d'une paire de lunettes. Selon le cas, les attaches permettant d'accrocher des faces complémentaires sur les verres d'une paire de lunettes, peuvent être fixées de différentes manières sur les verres des faces complémentaires.

Ainsi le brevet US 5936702 décrit une face complémentaire fixée à une attache grâce à une vis, vissée dans le verre de la face complémentaire. La fixation des attaches par perçage du verre présente l'inconvénient d'affaiblir le verre dans la zone de perçage et de risquer de le briser. De même ce risque s'accroît avec le temps, les vis se desserrant progressivement et le verre peut être cassé lors du resserrage de la vis ou à cause des mouvements relatifs du verre et de l'attache lorsqu'il existe une certaine liberté entre les deux.

Le brevet FR-A-2768237 décrit une attache constituée par une pièce élastique en forme de U, la liaison du verre avec l'attache se faisant par simple pinçage élastique. La distance entre les branches de l'attache étant plus faible que l'épaisseur du verre, les branches sont écartées lors du montage de l'attache sur le verre pour assurer leur fonction de pince. Ce type de fixation ne permet pas de fixer de manière définitive l'attache au verre d'une face complémentaire. De plus, lors de poses successives d'une face complémentaire sur une paire de lunettes, les attaches peuvent rayer la paire de lunettes.

Le brevet US 5123724 décrit des attaches collées à une face complémentaire et reliées par une barre. L'attache comporte une partie en forme de U dans laquelle est inséré le verre de la face complémentaire ainsi que l'extrémité de la barre reliant les deux verres de la face complémentaire. La pose d'une face complémentaire sur une monture de paire de lunettes, est réalisée par une paroi transversale en saillie à l'arrière de l'attache. La barre collée dans la partie en forme de U de l'attache, est en contact avec le verre de la face complémentaire, rendant la fixation entre le verre et l'attache et celle entre l'attache et la barre fragiles, notamment lors de poses successives de la face complémentaire sur la paire de lunettes.

### Objet de l'invention

L'invention a pour but d'améliorer la fixation entre le verre d'une face complémentaire et l'attache destinée à l'accrocher à une paire de lunettes, de manière à obtenir une fixation permanente et solide.

Selon l'invention, ce but est atteint par le fait qu'une face interne de la base de l'attache, située à l'intérieur de l'encoche est inclinée d'un angle de l'ordre de 80° par rapport à la paroi latérale arrière de l'encoche.

Selon un développement de l'invention, les moyens de fixation comportent une paroi latérale supplémentaire parallèle à la paroi arrière et délimitant avec celle-ci une seconde encoche.

Selon une autre caractéristique de l'invention, le dispositif de montage comporte une barre comportant une attache surmoulée à chacune de ses extrémités, de manière à relier les deux verres d'une face complémentaire.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue en perspective d'un premier mode de réalisation d'une attache d'un système de montage selon l'invention.
La figure 2 est une vue de face de l'attache selon la figure 1.
La figure 3 est une vue en perspective d'un second mode de réalisation d'une attache d'un système de montage selon l'invention.
La figure 4 représente un mode particulier de réalisation d'une barre d'un système de montage selon l'invention.
La figure 5 est une vue de face de l'attache selon la figure 3.
Les figures 6 et 7 représentent un système de montage selon l'invention respectivement en vue de face et en vue de dessus.
La figure 8 illustre une disposition particulière des attaches sur une face complémentaire.

### Description de modes particuliers de réalisation.

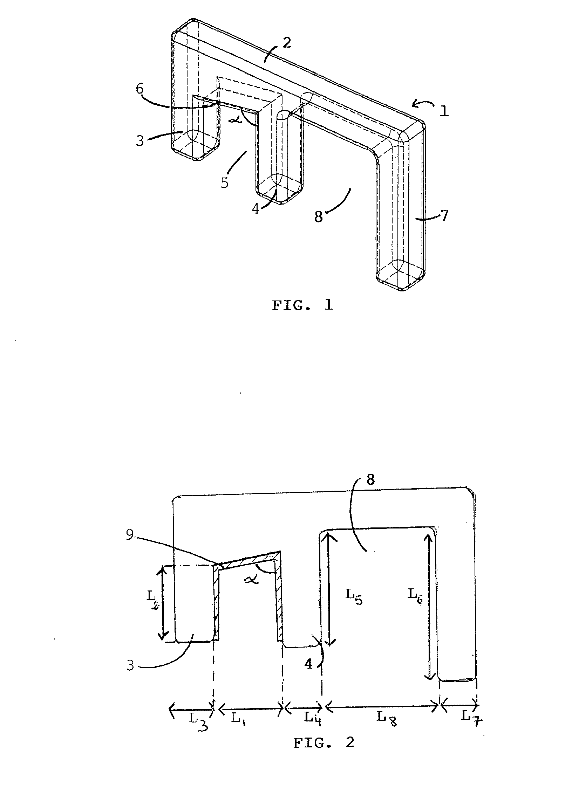

Selon les figures 1 et 2, l'attache 1 destinée à accrocher une face complémentaire sur une paire de lunettes, comporte une base 2, qui délimite avec des parois latérales avant 3 et arrière 4 une première encoche 5, dans laquelle le verre d'une face complémentaire est inséré et collé. La face interne 6 de la base 2 de l'attache 1, située à l'intérieur de l'encoche 5 est inclinée d'un angle ∝ de l'ordre de 80° par rapport à la paroi latérale arrière 4 de l'encoche 5. L'inclinaison de la face interne 6 permet une meilleure fixation du verre de la face complémentaire dans l'encoche 5 de l'attache 1. La distance L₁ entre les parois latérales avant et arrière de l'encoche 5 est de préférence égale à l'épaisseur du verre de la face complémentaire, qui est destiné à être inséré dans l'encoche 5.

L'attache 1 comporte également une paroi latérale supplémentaire 7 parallèle à la paroi arrière 4 et délimitant avec celle-ci une seconde encoche 8, destinée à accrocher la face complémentaire sur une paire de lunettes. La face interne de la base 2 située à l'intérieur de l'encoche 8 est de préférence perpendiculaire à la paroi latérale supplémentaire et à la paroi arrière. La paroi supplémentaire 7 a de préférence une longueur L₆ supérieure à la longueur L₅ de la paroi arrière.

Les verres des faces complémentaires sont de préférence des verres organiques, par exemple le carbonate de diallyl-glycol ou CR39. Ils sont souvent composés d'une face avant convexe, d'une face arrière concave et d'un chant définissant l'épaisseur du verre et lui-même légèrement incliné. L'inclinaison de la face interne 6 assure alors un meilleur contact entre l'encoche de l'attache et les trois parois du verre.

L'attache est en matière plastique moulée par injection, et de préférence en polyamide, par exemple en TECHNYL ® B230. De manière à être compatible avec l'attache et le verre de la face complémentaire, de natures différentes et donc à assurer une fixation solide et permanente, la colle 9 est de préférence une colle de type Cyanoacrylate éthyle, par exemple la colle Araglue 70E ®.

L'attache est de petite dimension. À titre d'exemple, les épaisseurs L₃, L₄, L₇ des parois latérales 3, 4 et 7 sont de 1 mm. La longueur L₁ correspondant à la distance entre les deux parois latérales avant et arrière est de 1,8 mm. La longueur L₈ correspondant à la distance entre la paroi arrière 4 et la paroi supplémentaire 7 est de préférence comprise entre 3,5 mm et 5 mm, mais peut varier selon l'épaisseur de la monture de la paire de lunettes, sur laquelle est appliquée la face complémentaire. La longueur L₆ de la paroi supplémentaire 7 est de 4mm tandis que les longueurs respectives des parois avant 3 et arrière 4, L₂ et L₅, sont respectivement de2 mm et 3 mm.

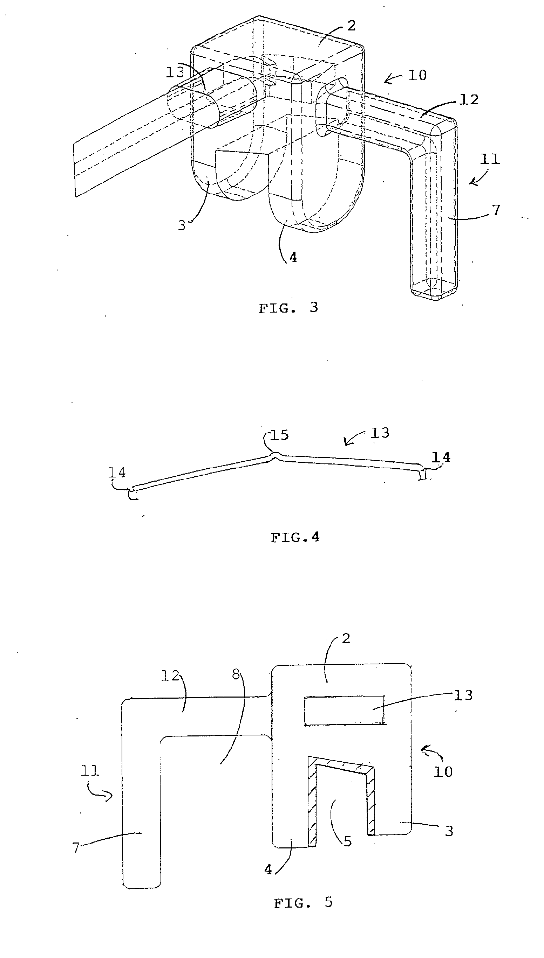

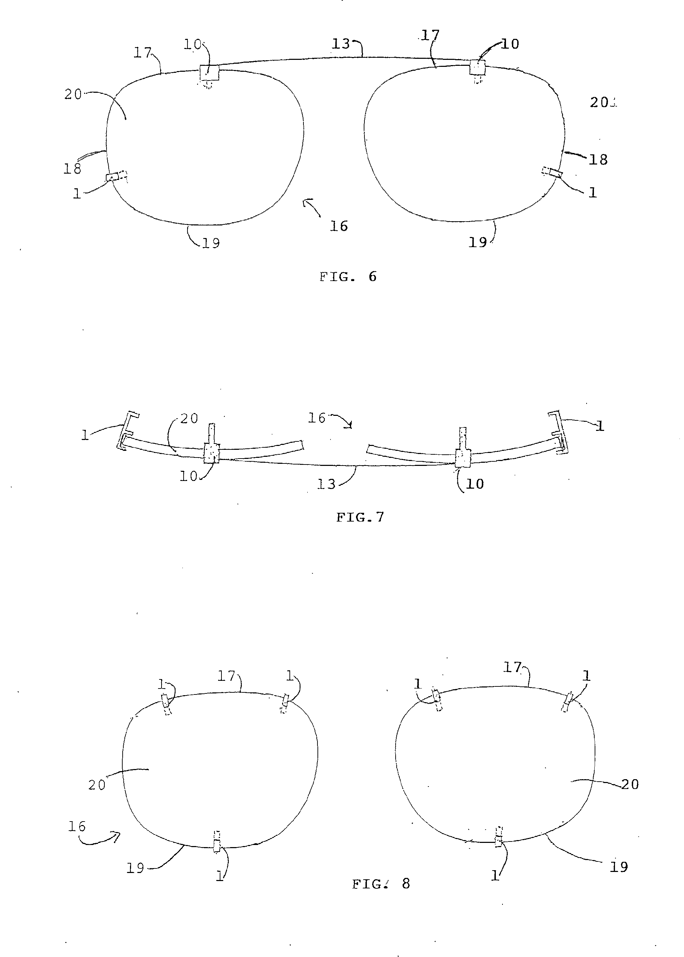

Selon la variante de réalisation représentée aux figures 3 et 5, l'attache 10 comporte un crochet 11 adjacent à la paroi latérale arrière 4. Le crochet 11 délimite avec la paroi arrière 4 l'encoche 8, destinée à accrocher la face complémentaire à une paire de lunettes. Le crochet 11 est formé par une paroi transversale 12 solidaire à la base 2 de l'attache 10 et par la paroi latérale supplémentaire 7, parallèle à la paroi latérale arrière 4. L'attache 10 est surmoulée sur une extrémité d'une barre 13, destinée à relier les deux verres de la face complémentaire. Selon ce mode de réalisation, la base 2 de l'attache 10 est élargie de manière à améliorer la fixation entre l'attache 10 et la barre 13.

Sur la figure 4, la barre 13 comprend un crantage 14 à chacune de ses deux extrémités et un index de centrage 15 situé dans la partie centrale de la barre. La barre 13 est de préférence métallique, par exemple en acier inoxydable. Son épaisseur relativement faible lui permet d'être souple et de présenter un effet ressort, ce qui permet d'ajuster la barre lors de la pose de la face complémentaire sur la paire de lunettes. Les crantages 14 situés aux extrémités de la barre 13 permettent une meilleure liaison entre la barre et l'attache lors du surmoulage.

Sur les figures 6 et 7, deux verres 20 sont reliés entre eux par la barre 13. Aux extrémités de la barre 13, sont surmoulées deux attaches 10, elles-mêmes collées sur la partie supérieure 17 de chacun des verres de la face complémentaire 16. Deux attaches 1 sont également collées sur chaque verre de la face complémentaire 16, de préférence sur les côtés temporaux 18.

Sur la figure 8, trois attaches 1 sont collées sur chacun des verres 20 de la face complémentaire 16, deux attaches 1 étant placées sur la partie supérieure 17 de chaque verre, et la troisième attache étant de préférence située sur la partie inférieure 19 de chaque verre. Les verres de la face complémentaire sont alors séparément accrochés sur la monture d'une paire de lunettes.

## Revendications

1. Dispositif de montage d'une face complémentaire destinée à être posée sur une paire de lunettes, comprenant au moins une attache (1,10) en matière plastique moulée, ladite attache (1) comprenant :
- une base (2) délimitant avec des parois latérales avant (3) et arrière (4) une première encoche (5) dans laquelle un verre de la face complémentaire est inséré et collé,
- et des moyens de fixation destinés à accrocher la face complémentaire (16) sur un verre de la paire de lunette,
dispositif **caractérisé en ce qu'**une face interne (6) de la base (2) de l'attache (1,10), située à l'intérieur de l'encoche (5) est inclinée d'un angle (α) de l'ordre de 80° par rapport à la paroi latérale arrière (4) de l'encoche (5).

2. Dispositif de montage selon la revendication 1, **caractérisé en ce que** les moyens de fixation comportent une paroi latérale supplémentaire (7) parallèle à la paroi arrière (4) et délimitant avec celle-ci une seconde encoche (8).

3. Dispositif de montage selon la revendication 2, **caractérisé en ce que** les moyens de fixation comportent une paroi transversale (12) solidaire de la base (2), les parois latérale supplémentaire (7) et transversale (12) délimitant un crochet (11) formant avec la paroi latérale arrière (4) la seconde encoche (8).

4. Dispositif de montage selon l'une quelconque des revendications 1 à 3, **caractérisé en ce que** la longueur de la paroi latérale supplémentaire (7) est supérieure à celle de la paroi arrière (4).

5. Dispositif de montage selon l'une quelconque des revendications 1 à 4, **caractérisé en ce que** l'attache (1, 10) est en polyamide.

6. Dispositif de montage selon l'une quelconque des revendications 1 à 5, **caractérisé en ce qu'**il comporte une barre (13) comportant une attache (10) surmoulée à chacune de ses extrémités, de manière à relier deux verre de la face complémentaire (16).

7. Dispositif de montage selon la revendication 6, **caractérisé en ce que** la barre (13) comprend un crantage (14) à chacune de ses deux extrémités.

8. Dispositif de montage selon l'une des revendications 6 à 7, **caractérisé en ce que** la barre (13) comprend en sa partie centrale un index de centrage (15).

9. Dispositif de montage selon l'une quelconque des revendications 1 à 8, **caractérisé en ce que** le verre de la face complémentaire (16) est collé dans la première encoche (5) de l'attache (1,10) au moyen d'une colle (9) de type cyanoacrylate éthyle.
